Europäisches Patentamt

European Patent Office

Office européen des brevets

(19)

(11) **EP 0 713 224 B1**

(12)

# FASCICULE DE BREVET EUROPEEN

(45) Date de publication et mention
de la délivrance du brevet:
**22.07.1998 Bulletin 1998/30**

(51) Int Cl.⁶: **G21C 17/00**

(21) Numéro de dépôt: **95402333.9**

(22) Date de dépôt: **19.10.1995**

(54) **Procédé et dispositif de simulation et de contrôle d'une intervention dans un milieu irradiant**

Verfahren und Vorrichtung zur Simulation und Überprüfung eines Eingriffs in einem bestrahlenden Medium

Method and apparatus for simulating and monitoring a servicing action in an irradiating environment

(84) Etats contractants désignés:
**BE CH DE ES LI SE**

(30) Priorité: **17.11.1994 FR 9413782**

(43) Date de publication de la demande:
**22.05.1996 Bulletin 1996/21**

(73) Titulaire: **FRAMATOME
92400 Courbevoie (FR)**

(72) Inventeurs:
- **Roumain de la Touche, Xavier
  F-71100 Chalon-sur-Saone (FR)**
- **Giraud, André
  F-91460 Marcoussis (FR)**

(74) Mandataire: **Bouget, Lucien et al
Cabinet Lavoix
2, Place d'Estienne d'Orves
75441 Paris Cédex 09 (FR)**

(56) Documents cités:
FR-A- 2 693 583         GB-A- 1 177 936
GB-A- 2 209 235         US-A- 5 077 685

- **DATABASE WPI Week 8532 Derwent
  Publications Ltd., London, GB; AN 85-193254 &
  JP-A-59 054 985 (HITACHI) , 29 Mars 1984**
- **PATENT ABSTRACTS OF JAPAN vol. 008 no.
  157 (P-288) ,20 Juillet 1984 & JP-A-59 054985
  (CHIYUUBU DENRIYOKU KK;OTHERS: 01) 29
  Mars 1984**
- **PATENT ABSTRACTS OF JAPAN vol. 011 no.
  042 (P-545) ,6 Février 1987 & JP-A-61 212782
  (CHUBU ELECTRIC POWER CO INC;OTHERS:
  01) 20 Septembre 1986**

**Description**

L'invention concerne un procédé et un dispositif d'intervention contrôlée dans un milieu irradiant simulé.

Dans le cadre de l'exploitation des réacteurs nucléaires, on est amené à effectuer des interventions dans des zones soumises à des rayonnements ionisants tels que les rayons gamma.

Certaines de ces interventions qui sont nécessaires par exemple pour effectuer des opérations d'entretien, de contrôle ou de réparations de certains composants du réacteur nucléaire, doivent être effectuées par du personnel qui se trouve exposé aux radiations pendant l'intervention.

Il est bien entendu souhaitable de limiter à une valeur très faible la dose de rayonnements reçue par le personnel travaillant dans des zones irradiantes.

Il n'est pas possible d'utiliser des tenues absorbantes de ce type de rayonnement $\gamma$, dans la mesure où les opérateurs chargés des interventions en milieu irradiant doivent pouvoir se déplacer facilement et effectuer des opérations nécessitant des mouvements précis. En outre, le personnel doit pouvoir intervenir dans des zones exiguës qui ne sont accessibles que par des ouvertures de faibles dimensions. Il en est ainsi par exemple des interventions dans la boîte à eau d'un générateur de vapeur dans laquelle les opérateurs ne peuvent pénétrer que par un trou d'homme de dimensions réduites.

Pour limiter la dose de rayonnements reçue par les opérateurs dans une zone d'intervention irradiante, il est nécessaire de réduire au maximum le temps de présence des opérateurs dans la zone d'intervention.

On doit donc disposer d'un personnel nombreux et parfaitement entraîné de manière à réduire le temps de présence de chacun des opérateurs chargés d'une tâche particulière dans le milieu d'intervention irradiant.

De manière à assurer un entraînement efficace du personnel chargé des interventions en milieu irradiant, on réalise des maquettes reproduisant la disposition des éléments du réacteur nucléaire dans la zone d'intervention, dans des centres d'entraînement du personnel qui sont généralement situés en-dehors du site du réacteur nucléaire. Ces maquettes permettent également de valider le choix d'un outillage ou d'une technique particulière avant de réaliser une intervention dans la zone réelle du réacteur nucléaire.

Il peut être également nécessaire d'utiliser une maquette d'une zone du réacteur nucléaire, sur le site même du réacteur, de manière à entraîner le personnel du site (exploitant) ou à étudier les conditions dans lesquelles a pu se produire un incident au cours d'une intervention réelle et à valider la meilleure technique de traitement de cet incident.

Dans tous les cas mentionnés ci-dessus où l'on simule un environnement physique dans un but de formation, d'étude ou d'essai, un paramètre important n'est pas pris en compte, du fait qu'on n'est pas en mesure de déterminer la dose d'irradiation qu'aurait reçue l'opérateur pendant une intervention réelle identique à l'intervention simulée dans la maquette d'essai.

On a proposé de simuler la contamination par des particules radioactives, dans une zone d'intervention, en utilisant une ou plusieurs sources d'émission d'un produit sous forme divisée qui peut être constitué par un liquide, une poudre ou un gaz.

Une telle méthode de simulation qui utilise les propriétés de fixation, sur des surfaces en contact ou à très faibles distances (quelques centimètres), des matières sous forme de liquide, de poudre ou de gaz est utile pour simuler la contamination radioactive des intervenants (absorption de particules radioactives ou présence de ces particules sur les vêtements ou le corps).

Une telle méthode ne permet cependant pas de simuler l'irradiation d'un opérateur lors d'une intervention dans un milieu irradiant et de déterminer la dose de rayonnements reçue par l'opérateur au cours de l'intervention.

Le calcul d'une dose reçue par un opérateur par la simple multiplication d'un débit de dose supposé constant (approximation peu justifiable) et d'un temps de présence dans la zone est trop approximative et peu réaliste.

D'autre part, une simulation utilisant des sources de rayonnement gamma atténuées émettant un très faible rayonnement ne serait pas acceptée par les autorités médicales (SCPRI), bien que la dose reçue par les opérateurs pendant les phases d'entraînement et d'essai puisse être limitée à une très faible valeur.

Dans le GB-A-2.209.235 on a proposé un procédé de simulation d'interventions dans un milieu irradié utilisant un émetteur et un récepteur d'ondes radio-électriques ainsi que des moyens pour déterminer la distance entre le récepteur et l'émetteur à partir des ondes radio-électriques. Le procédé ne permet pas de déterminer l'équivalent d'une dose reçue par un opérateur au cours d'une intervention.

Dans le FR-A-2.693.583, on a proposé un procédé de simulation d'interventions en milieu irradié fondé sur un repérage par triangulation de la position des opérateurs dans le milieu irradié simulé. Chaque intervenant porte une source d'ondes ultrasonores qui permet de repérer sa position de manière précise. Un superviseur utilisant un logiciel de simulation permet de transmettre et d'afficher les doses simulées reçues par les intervenants. La simulation est donc de type purement informatique et ne met pas en oeuvre des émetteurs simulant la présence de sources radio-actives.

Le GB-A-1.177.936 concerne un procédé dans lequel des moyens de détection qui se déplacent dans un champ électro-magnétique induisent un courant qui est utilisé pour réaliser une électrolyse. Le matériau déposé par électrolyse permet d'obtenir des indications sur une dose d'irradiation simulée reçue par un intervenant portant le moyen de détection.

Ces procédés selon l'art antérieur ne permettent pas d'obtenir tous les avantages attendus d'un procédé de simulation utilisable pour l'entraînement d'intervenants et pour réaliser des études sur des incidents lors d'interventions réelles en milieu irradié.

Le but de l'invention est donc de proposer un procédé de simulation et de contrôle d'une intervention dans un milieu irradiant permettant d'obtenir des informations précises sur la dose d'irradiation qui serait reçue par un opérateur pendant une opération analogue dans un milieu irradiant réel, en simulant l'irradiation par l'émission d'ondes radio-électriques.

Dans ce but :

- on émet pendant des intervalles de temps définis successifs des signaux constitués par des ondes radio-électriques et des ondes ultrasonores à partir d'au moins une source disposée à un emplacement déterminé,
- on capte les ondes radio-électriques et les ondes ultrasonores émises à l'aide d'au moins un récepteur porté par au moins un opérateur effectuant l'intervention dans le milieu irradiant simulé, et
- on détermine l'équivalent d'énergie des ondes reçues par le récepteur au cours du temps, à partir des signaux constitués par les ondes radio-électriques, en tenant compte de la distance entre le récepteur et la source calculée à partir du temps de propagation des signaux constitués par les ondes ultrasonores.

De manière préférentielle, pour chacune des sources, on émet, à la suite d'un signal d'une onde radio-électrique émise par la source, une onde ultrasonore en direction du récepteur, on mesure le décalage dans le temps entre la réception du signal de l'onde radio-électrique et la réception de l'onde ultrasonore et on détermine à partir du décalage dans le temps et de la vitesse des ondes ultrasonores, la distance entre la source et le récepteur.

L'invention est également relative à un dispositif de contrôle et de simulation d'une intervention dans un milieu irradiant caractérisé par le fait qu'il comporte une pluralité de sources disposées dans des emplacements déterminés dans un espace représentatif du milieu irradiant dans lequel on réalise l'intervention et comportant chacune un émetteur d'ondes radio-électriques et un transducteur émetteur d'ondes ultrasonores,

- au moins un récepteur portable d'ondes radio-électriques et ultrasonores, et
- des moyens pour déterminer l'équivalent d'énergie des ondes reçues par le récepteur au cours du temps, à partir de signaux constitués par les ondes radio-électriques, en tenant compte de la distance entre le récepteur et la source, calculée à partir du temps de propagation de signaux constitués par les ondes ultrasonores.

Afin de bien faire comprendre l'invention, on va maintenant décrire, à titre d'exemple non limitatif, en se référant aux figures jointes en annexe, un mode de réalisation du procédé de simulation et de contrôle suivant l'invention, utilisé dans le cadre d'opérations d'essai et d'entraînement pour une intervention dans une zone irradiante d'un réacteur nucléaire.

La figure 1 est une vue générale d'une zone d'intervention pour essai et entraînement dans laquelle on simule la présence d'éléments irradiants.

Les figures 2A, 2B et 2C sont des diagrammes montrant la forme des signaux émis par des sources munies d'émetteurs d'ondes radio-électriques et ultrasoniques dans la même source, pour la mise en oeuvre du procédé suivant l'invention.

La figure 3 est une vue en élévation latérale d'un récepteur d'ondes radio-électriques qui peut être utilisé pour la mise en oeuvre du procédé suivant l'invention.

La figure 3A est une vue de dessus suivant A de la figure 3.

La figure 4 est une vue schématique en perspective et en coupe d'un dispositif permettant de simuler une intervention au voisinage de la boîte à eau d'un générateur de vapeur d'un réacteur nucléaire à eau sous pression.

La figure 5 est un organigramme fonctionnel du procédé de simulation.

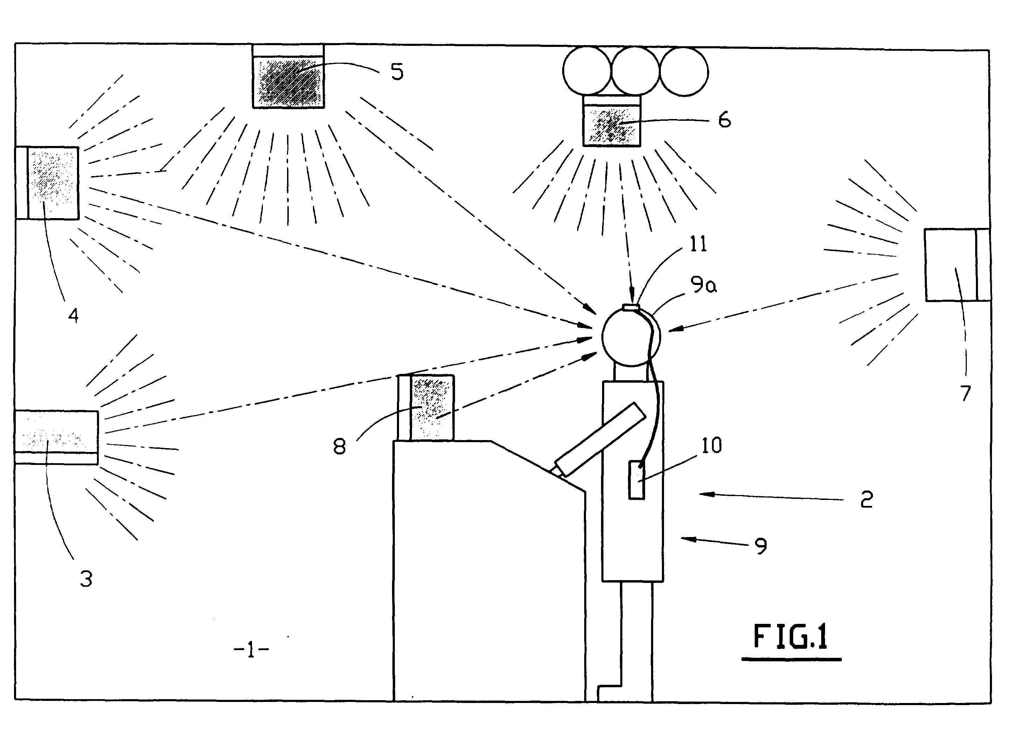

Sur la figure 1, on a représenté une zone d'intervention désignée de manière générale par le repère 1 dans laquelle un opérateur 2 effectue une intervention à titre d'entraînement ou pour réaliser un essai, en étant soumis à une irradiation simulée.

L'irradiation de l'opérateur 2 est simulée à partir de sources 3, 4, 5, 6, 7 et 8 réparties dans la zone d'intervention 1 d'une manière déterminée, de façon à reproduire, de la manière la plus exacte possible, une émission de rayonnement gamma par des éléments activés d'un réacteur nucléaire situés dans une zone d'intervention dont la zone 1 constitue une reproduction modélisée.

Pour réaliser l'intervention d'entraînement ou d'essai dans des conditions les plus réalistes possibles, l'opérateur 2 peut revêtir une tenue ventilée de protection comportant une combinaison 9 en un matériau souple tel que le vinyl et un casque de protection 9a équipé d'un dispositif de communication phonique avec l'extérieur de la zone d'intervention 1. Plusieurs opérateurs peuvent travailler dans la même zone et porter chacun un récepteur tel que 10 traitant les informations venant des mêmes sources 3 à 8.

L'opérateur porte un récepteur 10 destiné à capter l'émission des ondes radio-électriques et ultrasonores des sources 3 à 8 par l'intermédiaire d'une antenne 11 reliée au récepteur 10 de manière que des obstacles présents dans la zone d'intervention 1 et le corps même de l'opérateur ne masquent pas ces ondes.

Les sources qui sont sensiblement identiques, mobiles et réglables indépendamment les unes des autres, sont interchangeables.

Chacune des sources 3 à 8 comporte un émetteur d'ondes radio-électriques réglé à une fréquence voisine de 27 MHz et un émetteur d'ultrasons à une fréquence voisine de 40 KHz.

Sur la figure 1, on a représenté six sources, de manière à simplifier la représentation mais en réalité, on peut utiliser jusqu'à dix sources d'émission.

Par la suite, la description sera relative à un milieu irradiant simulé à partir de dix sources d'émission réparties dans la zone d'intervention.

L'émetteur d'ultrasons de chacune des sources est utilisé, comme il sera expliqué par la suite, pour effectuer une mesure de distance précise entre la source et le récepteur à un instant déterminé de l'intervention auquel on effectue une détermination d'une énergie reçue par le récepteur porté par l'opérateur, en provenance de l'une des sources d'émission.

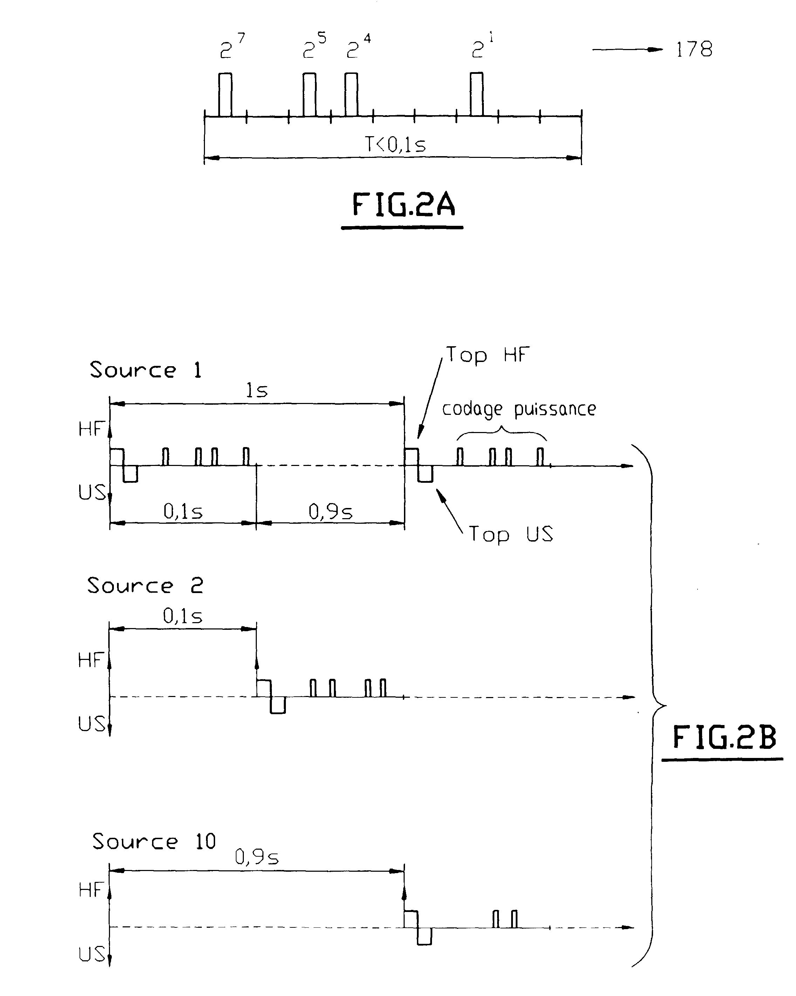

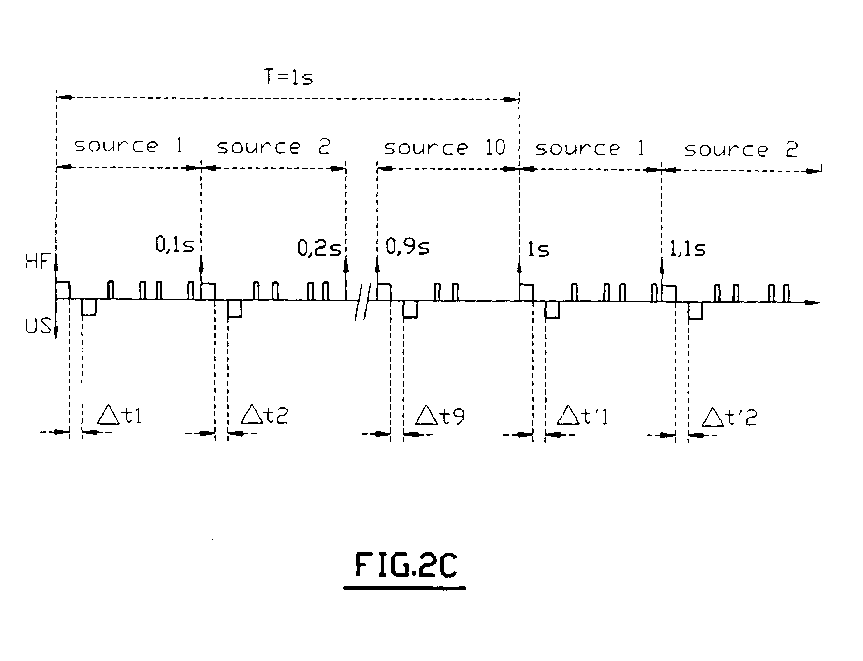

Sur les figures 2A, 2B et 2C, on a représenté les signaux émis par les sources et les signaux reçus par le récepteur, au cours d'une période de temps d'une seconde, dans le cas de dix sources émettant l'une à la suite de l'autre à l'intérieur de créneaux de 0,1 seconde.

La figure 2A est un exemple d'un signal représentatif d'une puissance (codage en binaire sur huit bits), émis par une source quelconque, pendant un intervalle de temps pris dans le créneau de 0,1 seconde propre à chaque source.

La figure 2B représente les signaux émis au cours du temps par les différentes sources d'émission, la représentation étant limitée, dans un but de simplification, aux signaux émis par la première, par la seconde et par la dixième sources de l'ensemble de sources d'émission.

La figure 2C représente les signaux reçus par le récepteur du fait de l'émission des sources, la représentation des signaux reçus étant limitée aux signaux provenant de la première, de la seconde et de la dixième sources.

De manière à simuler au mieux la dose d'irradiation reçue par l'opérateur, à partir de l'énergie reçue des sources d'émissions radio-électriques réparties dans la zone d'intervention, on tient compte du fait de la loi de perte de puissance d'une source de rayonnements gamma ponctuelle. Selon cette loi de perte de puissance, l'énergie par unité de volume reçue en un point situé à une distance $d$ de la source est inversement proportionnelle au carré de la distance $d$.

En principe, la loi de perte de la puissance provenant d'une source radio-électrique ponctuelle est identique à la loi de perte de puissance d'une source de rayonnements gamma ponctuelle. Cependant, en pratique, lorsqu'on utilise une source d'ondes radio-électriques dans un environnement encombré (mobilier, murs ...), la loi de perte de la puissance émise par les sources n'est pas respectée du fait des réflexions des ondes radio-électriques qui interfèrent les unes avec les autres.

De ce fait, en présence d'une ou plusieurs sources d'émissions radio-électriques dont les ondes interfèrent pendant leur parcours vers le récepteur, il n'est plus possible d'obtenir une loi de décroissance similaire à celle d'une source de rayonnement gamma.

On a donc imaginé un procédé de traitement permettant de simuler au mieux les puissances transmises par des sources de rayonnements gamma à un récepteur situé à une distance variable des sources.

Dans ce procédé de traitement, on prend en compte uniquement une distance mesurée entre le récepteur et la source et l'intensité de l'émetteur radio-électrique de la source.

Comme il est visible sur la figure 2B, chacune des sources radio-électriques du dispositif de simulation émet pendant une durée fixe de 100 millisecondes.

Dans cet intervalle de temps, un espace d'environ 80 millisecondes est partagé en huit créneaux d'émission permettant de réaliser un codage binaire de la valeur de la puissance de la source, destiné à simuler une source de rayons gamma ayant une certaine puissance.

Au cours de chacun des créneaux de temps, la source émet une impulsion représentée sur la figure par un signal de forme carrée ou n'émet aucun signal. On obtient ainsi une représentation binaire de la puissance simulée de la source en attribuant au créneau la valeur 1 ou la valeur zéro suivant qu'un signal est présent ou non.

On peut ainsi transmettre la valeur de la puissance de la source qui peut être définie par un nombre compris entre 0 et 255 du fait des huit positions binaires définies par les huit créneaux de temps.

A titre d'exemple, le signal représenté sur la partie 2A de la figure 2 correspond à une valeur affichée de la puissance de 178.

Chacune des sources comporte donc un émetteur radio-électrique qui transmet un signal haute fréquence représentatif d'une valeur théorique de la puissance de la source.

On possède ainsi des moyens d'une grande souplesse pour simuler des sources de rayons gamma de puissances différentes ; les 20 premières millisecondes de chaque intervalle de temps sont utilisées pour obtenir les informations nécessaires au calcul de la distance source-récepteur.

Chacune des sources comporte également des transducteurs ultrasonores commandés par l'émetteur radio-électrique, de manière à émettre une onde ultrasonore en direction du récepteur à la suite d'une première impulsion radio-électrique.

Sur la figure 2B, on a représenté le signal d'émission radio-électrique de sources 1, 2 et 10, au-dessus de l'axe horizontal constituant l'axe des temps et le signal d'émission ultrasonore en-dessous de l'axe des temps.

Sur la figure 2C, on a représenté les signaux reçus par le récepteur au cours d'une période d'une seconde pendant laquelle les sources 1 à 10 émettent successivement pendant des périodes de 100 millisecondes.

On mesure sur le récepteur le temps $\Delta t$ séparant la réception de la première impulsion du signal radio-électrique de la réception du signal ultrasonore (valeurs $\Delta t_1$, $\Delta t_2$, ... $\Delta t_9$, $\Delta t'_1$, $\Delta t'_2$ ,...).

Du fait que le signal haute fréquence dont la vitesse de transmission est voisine de 300.000 km/s est reçu quasi-instantanément sur le récepteur et que l'onde ultrasonore se déplace à une vitesse connue de l'ordre de 340 m/s, la mesure de $\Delta t$ permet de déterminer de manière très précise la distance entre le récepteur et la source.

Pour chacune des sources 1 à 10 émettant successivement pendant une période de 100 millisecondes, on détermine ainsi la distance du récepteur à la source à partir de la valeur d'un décalage dans le temps $\Delta t$ entre la réception du signal haute fréquence et la réception du signal ultrasonore et la valeur de la puissance d'émission de la source donnée par le signal haute fréquence.

Pour chacune des sources 1 à 10, on détermine à partir de la puissance d'émission simulée et de la distance, le débit de dose théorique venant de la source à l'emplacement du récepteur et donc la dose reçue pendant une durée d'une seconde.

Cette valeur ainsi traitée est incrémentée et affichée sur le récepteur, en temps réel, pour chacune des sources l'une après l'autre toutes les 0,1 seconde.

Cette valeur cumulée constitue une simulation d'une dose d'irradiation reçue par l'opérateur 2 évoluant dans le milieu irradiant simulé 1.

Après un intervalle de temps d'une seconde pendant lequel on a réalisé des émissions successives de chacune des sources 1 à 10, on réalise une émission identique, de manière successive, par les sources 1 à 10, pendant un nouvel intervalle de temps d'une seconde.

Le récepteur 10 porté par l'opérateur 2 comporte des moyens d'affichage de l'énergie cumulée depuis le début de l'intervention qui est représentative d'une dose d'irradiation qui serait reçue pendant une intervention similaire dans un milieu irradiant réel.

Il est possible d'associer au récepteur, des moyens de signalisation visuelle ou auditive permettant d'avertir l'opérateur dans le cas où l'énergie totale représentative de la dose d'irradiation dépasse un certain niveau déterminé ou encore dans le cas où l'incrémentation de cette énergie au cours d'un intervalle de temps ou d'intervalles de temps successifs dépasse une certaine valeur prédéterminée.

La puissance codée de chacune des sources correspond à un débit de dose d'irradiation d'une source de rayonnements à une certaine distance.

Par exemple, cette puissance peut être codée de manière à correspondre à un débit de dose par heure à une distance de 30 cm de la source de rayonnement.

Ainsi, une puissance codée par la valeur 200 correspond à un débit de dose de 200 $mS_v$/h à 30 cm de la source.

Dans le cas où l'on a mesuré un décalage de temps $\Delta t$ de 10 millisecondes entre la réception des ondes haute fréquence d'une source et la réception de l'onde ultrasonore, la distance de la source peut être calculée à $0,01 \times 340 = 3,4$ m.

Dans le cas d'une puissance codée de 200, la dose correspondante par seconde est donc de :

$$200 \times (0,3/3,4)^2 : 3.600 = 4,3 \ 10^{-4} \ mS_v.$$

Les valeurs de dose par seconde pour chacune des sources sont cumulées et donnent lieu à une incrémentation de l'affichage dès que l'augmentation de doses cumulées dépasse la sensibilité de l'affichage.

Le déposant a utilisé un récepteur comportant un moyen d'affichage dont la sensibilité est de $10^{-2}$ $mS_v$, ce qui correspond à un millirem et une sensibilité d'incrémentation hors afficheur de $10^{-5}$ $mS_v$ (3 chiffres significatifs pris en compte mais non affichés).

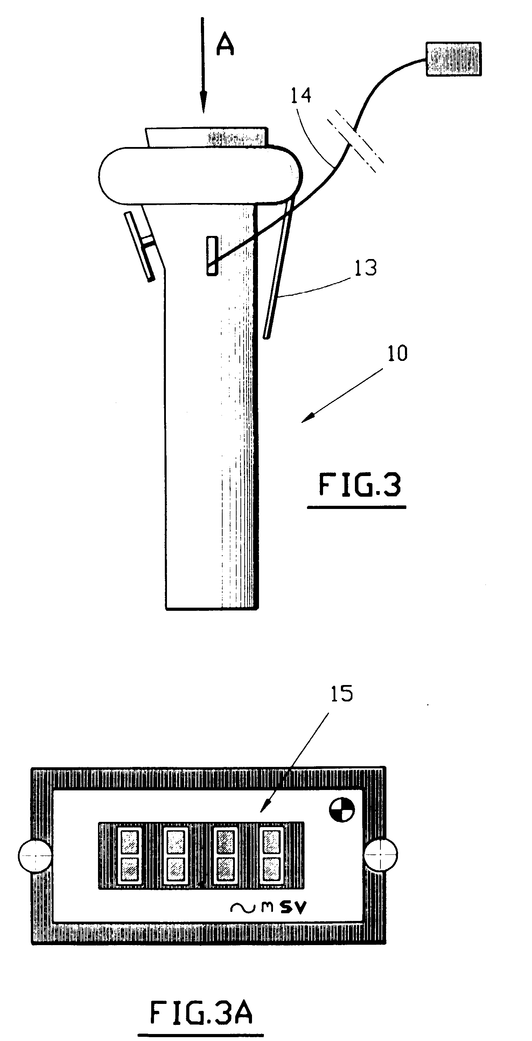

Sur les figures 3 et 3A, on a représenté un récepteur 10 qui est réalisé sous une forme et avec une dimension identique à celle d'un dosimètre de rayonnements habituellement utilisé dans le cadre des interventions en milieu irradié.

Le récepteur 10 comporte une patte 13 de fixation sur la tenue de protection de l'opérateur et une antenne 14.

Comme il est visible sur la figure 3A, la face supérieure du récepteur 10 comporte un cadran d'affichage 15 de la dose cumulée reçue (en $mS_v$) et éventuellement des moyens de signalisation lumineuse de dépassement d'une dose cumulée.

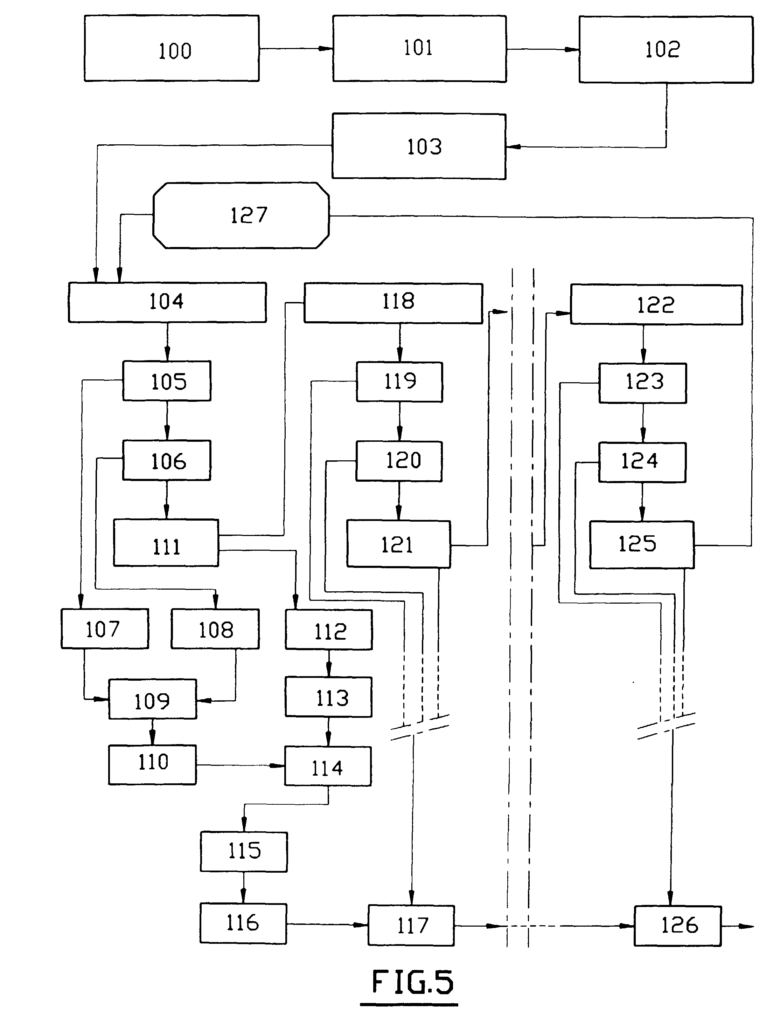

Sur la figure 5, on a représenté sous la forme d'un organigramme, les différentes étapes successives décrites ci-dessus et permettant le calcul et l'affichage de la dose reçue par un opérateur.

Les différentes étapes figurant sur l'organigramme sont les suivantes :

-    100 Stockage du matériel matériel
-    101 Charge des batteries
-    102 Synchronisation des sources
-    103 Installation des sources selon environnement à simuler
-    104 Emission source 1
-    105 Top HF durée ~ 1 ms
-    106 Top US durée ~ 1 ms
-    107 Réception Top HF
-    108 Réception Top US
-    109 Mesure $\Delta t$
-    110 Calcul distance source- récepteur
-    111 Codage puissance HF durée ~ 80 ms
-    112 Réception codage puissance
-    113 Décodage puissance
-    114 Calcul débit de dose
-    115 Calcul dose équivalente par seconde
-    116 Incrémentation afficheur

- 117 Incrémentation afficheur
- 118 Emission source 2
- 119 Top HF
- 120 Top US
- 121 Codage Puissance HF
- 122 Emission source 10
- 123 Top HF
- 124 Top US
- 125 Codage puissance HF
- 126 Incrémentation afficheur
- 127 Nouveau cycle d'une seconde.

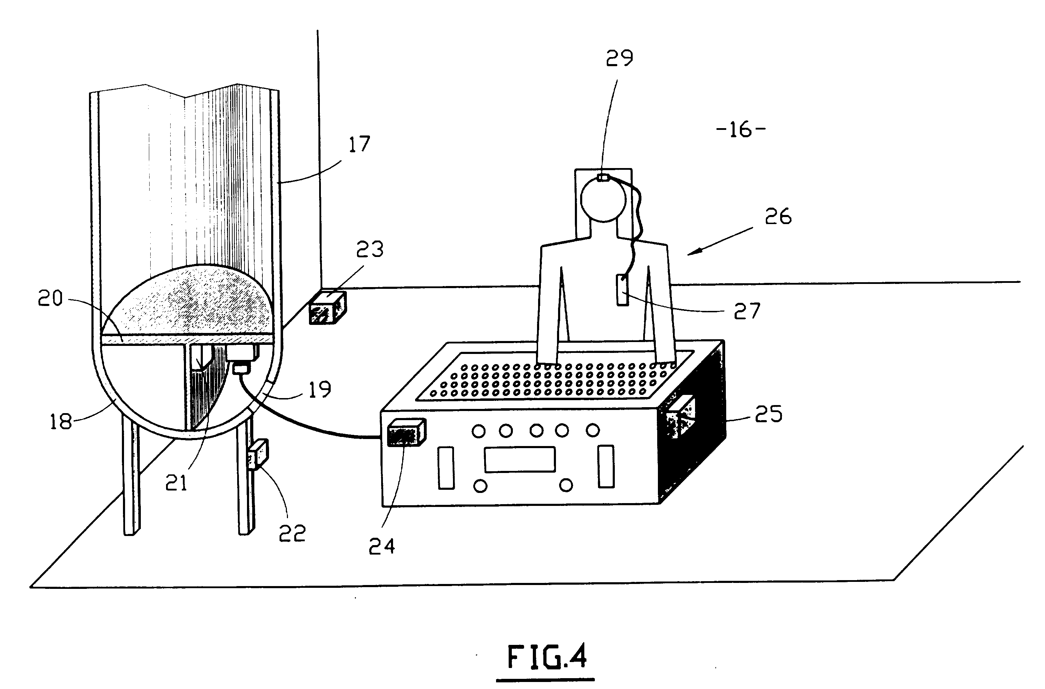

Sur la figure 4, on voit une zone d'intervention en milieu irradiant simulé qui peut être utilisée pour effectuer des opérations d'entraînement d'opérateurs à des interventions dans la boîte à eau d'un générateur de vapeur.

La zone d'intervention simulée 16 comporte une enveloppe de générateur 17 comportant un fond bombé 18 délimitant la boîte à eau dans laquelle on effectue une intervention par passage d'outillages à travers un trou d'homme 19.

L'enveloppe 17 et le fond de générateur 18 sont constitués par des éléments non irradiés utilisés pour l'entraînement des opérateurs à des interventions, par exemple sur les tubes du générateur de vapeur accessibles par le dessous de la plaque tubulaire 20.

De manière à simuler une ambiance irradiante, des sources d'émission 21, 22, 23, 24 et 25 ont été réparties dans la zone d'intervention 16.

Chacune des sources 21, 22, 23, 24 et 25 comporte un émetteur d'ondes à haute fréquence et un transducteur d'ultrasons, comme décrit plus haut.

On peut ainsi réaliser dans la zone 16, la simulation d'un milieu irradiant et le contrôle d'une intervention d'un opérateur 26.

L'opérateur 26 porte un récepteur 27 comprenant un boîtier de traitement électronique permettant d'afficher directement une valeur de la dose reçue par l'opérateur 26 lors d'une intervention dans la zone 16 comportant un fond de générateur de vapeur.

Il peut être nécessaire de placer une antenne 29 au sommet du casque de la tenue de protection de l'opérateur 26, de manière à favoriser le captage des ondes radio-électriques quelle que soit la position de l'opérateur à l'intérieur de la zone d'intervention 16.

L'émission d'un rayonnement à travers le trou d'homme 19 de la boîte à eau 18 du générateur de vapeur peut être simulée en associant un guide d'ondes à une source qu'on disposerait sur la bride du trou d'homme de la boîte à eau.

Dans tous les cas, le procédé et le dispositif suivant l'invention permettent de simuler dans des conditions satisfaisantes l'émission d'un rayonnement ionisant dans une zone d'intervention et de déterminer de manière réaliste, la dose de rayonnements qui serait reçue par un opérateur effectuant une intervention dans une zone irradiante analogue à la zone d'intervention simulée.

L'invention ne se limite pas au mode de réalisation qui a été décrit.

C'est ainsi que les sources comportant les émetteurs d'ondes radio-électriques et les transducteurs d'ultrasons peuvent être répartis d'une manière quelconque dans la zone d'intervention, en fonction des données relatives à la zone irradiante du réacteur nucléaire dont on réalise la simulation.

Le nombre de sources peut être variable en fonction des résultats escomptés de la simulation et des possibilités des moyens électroniques de traitement des signaux.

On peut réaliser la détermination de l'énergie des ondes reçues par le récepteur d'une manière différente de celle qui a été décrite. Dans le cas du procédé de détermination décrit ci-dessus, on calcule directement l'énergie reçue à partir de la puissance d'émission de la source et de la distance mesurée de la source au récepteur, en appliquant la loi relative à la perte de la puissance des rayons gamma en fonction de la distance. Il serait également possible de déterminer directement l'énergie des ondes radio-électriques reçues, en supposant que la loi de perte de puissance de ces ondes est identique à la loi de perte de puissance d'un rayonnement tel qu'un rayonnement gamma et en supposant que les effets d'interférence des ondes provenant de différents émetteurs sont négligeables, ce qui peut être possible avec certaines dispositions des émetteurs.

Chacune des sources peut être réglée de manière à simuler un débit de dose variant dans un très large intervalle, par exemple de 1 à 200 $mS_v$/h à 30 cm de la source.

L'invention s'applique dans tous les cas où l'on désire entraîner du personnel d'intervention ou réaliser des essais de matériels utilisés par des opérateurs, avant une intervention réelle dans un milieu irradiant.

**Revendications**

1. Procédé de simulation et de contrôle d'une intervention dans un milieu irradiant caractérisé par le fait :

   - qu'on émet pendant des intervalles de temps définis successifs des signaux constitués par des ondes radio-électriques et des ondes ultrasonores à partir d'au moins une source (3, 4, 5, 6, 7, 8 ; 21, 22, 23, 24, 25) disposée à un emplacement déterminé,
   - qu'on capte les ondes radio-électriques et les ondes ultrasonores émises à l'aide d'au moins un récepteur (10 ; 27) porté par au moins un opérateur (2, 26) effectuant l'intervention dans le milieu irradiant simulé, et
   - qu'on détermine l'équivalent d'énergie des ondes reçues par le récepteur (10 ; 27) au cours du temps, à partir des signaux constitués par les ondes radio électriques, en tenant compte de la distance entre le récepteur (10; 27) et la source calculée à partir du temps de propagation des signaux constitués par les ondes ultrasonores.

2. Procédé suivant la revendication 1, caractérisé par le fait que pour chacune des sources, on émet, à la suite d'un signal d'une onde radio-électrique émise par la source, une onde ultrasonore en direction du récepteur, qu'on mesure le décalage dans le temps entre la réception du signal de l'onde radio-électrique et la réception de l'onde ultrasonore et qu'on détermine à partir du décalage dans le temps et de la vitesse des ondes ultrasonores, la distance entre la source et le récepteur.

3. Procédé suivant l'une quelconque des revendications 1 et 2, caractérisé par le fait :

   - qu'on mesure la distance entre la source et le récepteur au moment de la réception des signaux provenant de la source, et
   - qu'on détermine une énergie reçue de la source pendant un intervalle de temps déterminé, à partir d'une puissance d'émission simulée de la source et de la distance mesurée entre la source et le récepteur.

4. Procédé suivant la revendication 3, caractérisé par le fait qu'on émet une partie des ondes radio-électriques, sous la forme d'un signal représentatif de la puissance d'émission simulée de la source de laquelle proviennent les signaux.

5. Procédé suivant l'une quelconque des revendications 3 et 4, caractérisé par le fait qu'on émet, à partir de chacune des sources, des ondes radio-électriques sous forme d'un signal binaire représentatif de la puissance d'émission simulée de la source, l'intervalle de temps d'émission par la source des ondes radio-électriques représentant la puissance de manière codée étant partagé en créneaux de temps successifs au cours desquels on émet ou non un signal unitaire, de manière à définir une valeur 0 ou 1 dans le créneau de temps considéré.

6. Procédé suivant l'une quelconque des revendications 1 à 5, caractérisé par le fait qu'on émet des ondes radio-électriques à partir de chacune des sources d'une pluralité de sources, successivement, pendant un intervalle de temps de durée fixe,

   - qu'on détermine l'énergie reçue par le récepteur en provenance de chacune des sources pendant une durée correspondant à la durée totale d'émissions successives des sources de la pluralité de sources,
   - qu'on incrémente au fur et à mesure les énergies déterminées pour chacune des sources pour obtenir l'énergie totale reçue par le récepteur porté par l'opérateur au cours de l'intervention, représentative d'une dose de rayonnements reçue par un opérateur dans un milieu irradiant réel et en ajoutant successivement des valeurs d'incrémentation à l'énergie totale reçue précédemment.

7. Procédé suivant la revendication 6, caractérisé par le fait qu'on affiche, sur le récepteur, une valeur numérique représentative de l'énergie totale reçue par le récepteur au cours de l'intervention.

8. Procédé suivant la revendication 7, caractérisé par le fait qu'on déclenche un signal lumineux ou auditif, lorsque la valeur totale de l'énergie reçue par le récepteur dépasse une valeur déterminée.

9. Procédé suivant l'une quelconque des revendications 7 et 8, caractérisé par le fait qu'on déclenche un signal lumineux ou auditif, lorsque la valeur d'incrémentation de l'énergie reçue par le récepteur dépasse une valeur déterminée, pendant une période de temps déterminée.

10. Dispositif de contrôle et de simulation d'une intervention dans un milieu irradiant caractérisé par le fait qu'il comporte une pluralité de sources (3, 4, 5, 6, 7, 8 ; 21, 22, 23, 24, 25) disposées dans des emplacements déterminés dans un espace représentatif du milieu irradiant dans lequel on réalise l'intervention et comportant chacune un émetteur d'ondes radio-électriques et un transducteur émetteur d'ondes ultrasonores,

   - au moins un récepteur portable (10; 27) d'ondes radio-électriques et ultrasonores, et
   - des moyens pour déterminer l'équivalent d'énergie des ondes reçues par le récepteur (10; 27) au cours du temps, à partir de signaux constitués par les ondes radio-électriques, en tenant compte de la distance entre le récepteur (10; 27) et la source, calculée à partir du temps de propagation de signaux constitués par les ondes ultrasonores.

11. Dispositif selon la revendication 10, caractérisé par le fait que le récepteur comporte des moyens de calcul de la distance de chacune des sources au récepteur, en fonction d'un décalage temporel ($\Delta$t) entre la réception d'une onde radio-électrique et d'une onde ultrasonore.

**Patentansprüche**

1. Verfahren zur Simulation und Überprüfung eines Eingriffs in einer bestrahlten Umgebung, dadurch gekennzeichnet,

   - daß in bestimmten aufeinanderfolgenden Zeitintervallen Signale gesendet werden, die durch Radiowellen und Ultraschallwellen von mindestens einer an einem bestimmten Standort angeordneten Quelle (3, 4, 5, 6, 7, 8; 21, 22, 23, 24, 25) erzeugt werden,

   - daß die Radiowellen und die Ultraschallwellen von einem Empfänger (10; 27) empfangen werden, der von mindestens einem Operator (2; 26) getragen wird, welcher den Eingriff in der simulierten bestrahlten Umgebung durchführt, und

   - daß ausgehend von den durch Radiowellen erzeugten Signalen die in einer Zeitspanne vom Empfänger (10; 27) aufgenommenen Äquivalenzenergie der Wellen bestimmt wird, wobei aus der Übertragungszeit der durch Ultraschallwellen erzeugten Signale der Abstand zwischen dem Empfänger (10; 27) und der Quelle bestimmt wird.

2. Verfahren nach Anspruch 1, dadurch gekennzeichnet, daß jede Quelle nach einem abgestrahlten Radiowellensignal eine Ultraschallwelle in Richtung des Empfängers sendet, daß die Laufzeitdifferenz zwischen dem Empfang des Radiowellensignals und dem Empfang der Ultraschallwelle gemessen wird und daß aus der Zeitdifferenz und aus der Geschwindigkeitsdifferenz der Ultraschallwellen der Abstand zwischen der Quelle und dem Empfänger bestimmt wird.

3. Verfahren nach Anspruch 1 oder 2, dadurch gekennzeichnet,

   - daß im Augenblick des Empfanges der von der Quelle stammenden Signale der Abstand zwischen Quelle und Empfänger gemessen wird, und

   - daß eine in einem bestimmten Zeitintervall von der Quelle abgegebene Energie aus einer simulierten Sendeleistung der Quelle und aus dem zwischen der Quelle und dem Empfänger gemessenen Abstand bestimmt wird.

4. Verfahren nach Anspruch 3, dadurch gekennzeichnet, daß ein Teil der Radiowellen in Form eines Signals gesendet wird, das die simulierte Sendeleistung der Quelle, von der die Signale stammen, wiedergibt.

5. Verfahren nach einem der Ansprüche 3 oder 4, dadurch gekennzeichnet, daß jede Quelle Radiowellen in Form eines binären Signals sendet, das die simulierte Sendeleistung der Quelle wiedergibt, wobei der Zeitintervall, in dem die Quelle die Leistung als kodiertes Radiowellensignal sendet, in aufeinanderfolgende Zeitimpulse eingeteilt ist und während dieser ein Einheitssignal gesendet oder nicht gesendet wird, um in dem betrachteten Zeitimpuls einen Wert 0 oder 1 zu definieren.

6. Verfahren nach einem der Ansprüche 1 bis 5, dadurch gekennzeichnet, daß aus einer Vielzahl von Quellen alle Quellen während eines Zeitintervalls mit einer festen Dauer fortdauernd Radiowellen senden,

   - daß die durch den Empfänger aufgenommene Energie bestimmt, die in einem Zeitraum, der dem gesamten Zeitraum der fortdauernden Emission der Quellen entspricht, von allen Quellen stammt,

   - daß nach und nach jeder der Quellen bestimmte Energie hinzuaddiert wird, um die Gesamtenergie zu erhalten, die während des Eingriffs von dem vom Operator getragenen Empfänger aufgenommen wurde und die eine Strahlungsdosis darstellt, die ein Operator in einer echten bestrahlten Umgebung aufnimmt, wobei man nacheinander die aufaddierten Werte zur vorher erhaltenen Gesamtenergie hinzufügt.

7. Verfahren nach Anspruch 6, dadurch gekennzeichnet, daß an dem Empfänger ein Zahlenwert angezeigt wird, der während des Eingriffs die durch den Empfänger aufgenommene Gesamtenergie darstellt.

8. Verfahren nach Anspruch 7, dadurch gekennzeichnet, daß ein Licht- oder Hörsignal ausgelöst wird, wenn der Wert der durch den Empfänger aufgenommenen Gesamtenergie einen bestimmten Wert überschreitet.

9. Verfahren nach einem der Ansprüche 7 oder 8, dadurch gekennzeichnet, daß ein Licht- oder Hörsignal ausgelöst wird, wenn der aufaddierte Wert der durch den Empfänger aufgenommenen Energie in einer bestimmten Zeitspanne einen bestimmten Wert überschreitet.

10. Vorrichtung zur Überprüfung und Simulation eines Eingriffs in einer bestrahlten Umgebung, gekennzeichnet durch mehrere Quellen (3, 4, 5, 6, 7, 8; 21, 22, 23, 24, 25), die an bestimmten Plätzen in einem die bestrahlte Umgebung darstellenden Raum angeordnet sind, in dem der Eingriff durchgeführt wird, wobei jede Quelle umfaßt einen Radiowellensender und einen Transducer zum Senden von Ultraschallwellen,

- mindestens einen tragbaren Empfänger (10; 27) für Radio- und Ultraschallwellen, und
- Einrichtungen, um die Äquivalenzenergie zu bestimmen, die im Laufe der Zeit durch den Empfänger (10; 27) aufgenommen wurde und die von Signalen stammt, die durch Radiowellen gebildet werden, wobei aus der Laufzeit der durch Schallwellen erzeugten Signale der Abstand zwischen dem Empfänger (10; 27) und der Quelle berechnet wird.

11. Vorrichtung nach Anspruch 10, dadurch gekennzeichnet, daß in Abhängigkeit einer Zeitdifferenz (Δt) zwischen einem Radiowellenempfänger und einem Ultraschallwellenempfänger der Empfänger Einrichtungen zur Berechnung aller Abstände der Quellen zum Empfänger umfaßt.

## Claims

1. Process for simulating and monitoring a servicing action in an irradiating medium, characterised in that:

   at defined successive time intervals, signals consisting of radio-electric waves and ultrasonic waves are emitted from at least one source (3, 4, 5, 6, 7, 8; 21, 22, 23, 24, 25) placed at a specified location,
   the radio-electric waves and ultrasonic waves emitted are picked up by means of at least one receiver (10; 27) carried by at least one operator (2, 26) carrying out the servicing action in the simulated irradiating medium, and
   the energy equivalent of the waves received by the receiver (10; 27) in the course of time is determined from the signals consisting of the radio-electric waves, taking into account the distance between the receiver (10; 27) and the source calculated on the basis of the propagation time of the signals consisting of the ultrasonic waves.

2. Process according to claim 1, characterised in that for each source an ultrasonic wave is emitted in the direction of the receiver, following a signal of a radio-electric wave emitted by the source, the time shift between receiving the signal of the radio-electric wave and receiving the ultrasonic wave is measured and the distance between the source and the receiver is determined on the basis of the time shift and speed of the ultrasonic waves.

3. Process according to one of claims 1 and 2,

characterised in that:

   the distance between the source and the receiver is measured at the moment of receiving the signals coming from the source, and
   the energy received from the source over a specified period of time is determined, on the basis of a simulated power of emission of the source and the distance measured between the source and the receiver.

4. Process according to claim 3, characterised in that some of the radio-electric waves are emitted in the form of a signal representing the simulated power of emission of the source from which the signals are coming.

5. Process according to one of claims 3 and 4, characterised in that radio-electric waves are emitted from each of the sources in the form of a binary signal representing the simulated power of emission of the source, the time interval of emission of radio-electric waves by the source representing the power in coded fashion being divided into successive time segments during which a whole signal is or is not emitted, so as to define a value 0 or 1 in the time segment under consideration.

6. Process according to any one of claims 1 to 5, characterised in that radio-electric waves are emitted successively, from each of a plurality of sources, over a period of time of fixed duration,

   the energy received by the receiver from each of the sources during a period of time corresponding to the total duration of successive emissions from the sources of the plurality of sources is determined,
   the amounts of energy determined for each source are increased *pro rata* in order to obtain the total energy received by the receiver carried by the operator during the servicing action, representing a dose of radiation received by an operator in a real irradiating medium, and successively adding incremental values to the total energy received beforehand.

7. Process according to claim 6, characterised in that a digital value representing the total energy received by the receiver during the servicing action is displayed on the receiver.

8. Process according to claim 7, characterised in that a light or sound signal is triggered when the total value of the energy received by the receiver exceeds a specified level.

9. Process according to one of claims 7 and 8, characterised in that a light or sound signal is triggered when the incremental value of the energy received by the receiver exceeds a specified value, for a specified length of time.

10. Apparatus for simulating and monitoring a servicing action in an irradiating medium, characterised in that it comprises a plurality of sources (3, 4, 5, 6, 7, 8; 21, 22, 23, 24, 25) placed at specified locations in a space representing the irradiating medium in which the servicing action is carried out and each comprising an emitter of radio-electric waves and a transducer/emitter of ultrasonic waves,

at least one portable receiver (10; 27) of radio-electric and ultrasonic waves, and
means for determining the energy equivalent of the waves received by the receiver (10; 27) in the course of time from the signals consisting of the radio-electric waves, taking into account the distance between the receiver (10; 27) and the source, calculated on the basis of the propagation time of the signals consisting of the ultrasonic waves.

11. Apparatus according to claim 10, characterised in that the receiver comprises means for calculating the distance of each of the sources from the receiver, as a function of a time shift ($\Delta$t) between receiving a radio-electric wave and an ultrasonic wave.

FIG.1

FIG.2A

FIG.2B

T=1s

| source 1 | source 2 | source 10 | source 1 | source 2 |

HF

0,1s    0,2s    0,9s    1s    1,1s

US

$\triangle$t1    $\triangle$t2    $\triangle$t9    $\triangle$t'1    $\triangle$t'2

# FIG.2C

A

14

13

10

## FIG.3

15

∿ m SV

## FIG.3A

FIG.4

EP 0 713 224 B1

FIG.5